# EUROPEAN PATENT SPECIFICATION

(11) **EP 4 635 846 B1**
(45) Date of publication and mention of the grant of the patent: **02.12.2026**
(21) Application number: 24382397.8
(22) Date of filing: 16.04.2024
(51) Int. Cl.: B64C 27/02, B64C 27/59

(54) **GYROPLANE TAKE-OFF ROTOR**
TRAGSCHRAUBER-ABFLUGROTOR
ROTOR À DÉCOLAGE DE GYROPLAN

(43) Date of publication of application: 22.10.2025
(73) Proprietor: Ela Aviacion, S.L., 14290 Fuente Obejuna Córdoba (ES)
(72) Inventor: LÓPEZ SÁNCHEZ, Emilio José, 14290 FUENTE OBEJUNA (Córdoba) (ES)
(74) Representative: Herrero & Asociados, S.L.

(56) References cited:
- GB-A- 1 258 505
- GB-A- 643 876
- US-A- 2 163 893
- US-A1- 2017 341 733

## Description

### Object of the invention

The present invention falls within the technical field of gyroplanes, as well as in the field of blade supports for variable pitch blades, and relates in particular to a rotor for gyroplane take-off.

The rotor is configured to eliminate the take-off run of the gyroplane and thus allow an instantaneous take-off. To this end, modifications have been made to the rotor head to eliminate drag in the pre-launch phase by acting on the angle of attack of the two blades and a new pre-launch system that allows the rotor to be overloaded with turns before take-off. By reducing the angle of attack of the blades, the lift they generate and therefore their induced drag is reduced.

### Background of the invention

A gyroplane, also known as a gyrocopter, is a class of aircraft that uses a non-powered rotor in free autorotation to develop lift. Although it resembles a helicopter rotor in appearance, the difference between the helicopter and the gyroplane is that in the helicopter the rotor is attached to the engine and is powered, and in the gyroplane the rotor spins freely by the action of the wind passing from bottom to top generating the necessary lift without applying power to the rotor. Forward thrust is provided independently by a propeller, usually at the rear, driven by an engine.

A gyroplane is characterised by a free-spinning rotor that rotates due to the passage of air through the rotor from below. The downward component of the total aerodynamic reaction of the rotor provides lift to the vehicle, keeping it airborne. A separate propeller provides forward thrust and can be placed in a traction configuration, with the engine and propeller at the front of the fuselage, or in a thrust configuration, with the engine and propeller at the rear of the fuselage.

While a helicopter works by forcing the rotor blades through the air, sucking in air from above, the rotor blade of a gyroplane generates lift in the same way as the wing of a glider, by changing the angle of the air as the air moves up and back relative to the rotor blade. The free-spinning blades rotate by autorotation; the rotor blades are angled so that not only do they provide lift, but the angle of the blades causes the lift to accelerate the rotational speed of the blades until the rotor spins at a steady speed with the drag force and thrust force in balance.

Pitch control is achieved by tilting the rotor back and forth, and roll control is achieved by tilting the rotor laterally. Rotor pitch can be achieved using a tilting hub, tilting plate or servo-assisted control surfaces. A rudder provides yaw control.

Because the aircraft must be moving forward with respect to the surrounding air to force air through the upper rotor, gyroplanes need to make a take-off run except in strong headwinds, when the take-off run would be greatly reduced. Some types of gyroplanes have been shown to be capable of short take-offs or landings.

The gyroplane, like an aeroplane, needs to use a runway because it cannot take off vertically, like a helicopter. Conventional gyroplanes use a system called a pre-launcher or pre-rotator, whereby the engine is temporarily connected to the rotor via a transmission. In this way, the rotor blades are launched before the take-off run, thus reducing the take-off distance. A conventional two-seat cabin gyroplane requires about 200 metres to take off in ISA conditions at maximum take-off weight.

A number of patent documents relating to gyroplanes with rotors modified to allow a quasi-vertical take-off are known in the current state of the art. For example, US9126681 describes a mechanism in a swinging rotor head having a drive shaft with a support, in a hollow spindle, in a hollow central tower, with swinging side walls and with rotor blade anchor blocks bolted together, and with blade root anchor bolts that rotate with the blades, connected by 4 short, straight levers and 2 sliding plates that work together to turn the bolts and rotate the blades, changing the pitch.

US11001374 describes a gyroplane that includes a frame and a rotor hub attached to the frame. The gyroplane also includes a connector coupled to the rotor hub and configured to couple the rotor hub to a ground-based pre-rotator device for rotating the rotor hub during a vertical take-off operation. The gyroplane further includes a plurality of rotor blades coupled to the rotor hub, each rotor blade being configured such that rotation of the rotor hub, during the vertical take-off operation, results in twisting the rotor blade from a first blade pitch distribution to a second blade pitch distribution.

Document EP2279943 describes a gyroplane comprising a fuselage with cabin, on which is mounted a folding mast, a rotor head with a controllable torque sleeve and a pusher propeller with controllable pitch. In order to evenly distribute the load on the torsion sleeve during pre-rotation of the rotor, the torsion bar in the rotor head is made of flat composite plates which do not bend.

Various other mechanisms for controlling the pitch of rotor blades are known in the state of the art. For example, document GB 1 258 505 A describes a rotor system for an autogyro with a collective pitch control that uses a flexible cable to actuate a control rod. Unlike the present invention, this system relies on a tension element and lacks the robust and precise kinematic chain provided by the pivoting tie rod of the invention to convert the actuator's movement. Document US 2 163 893 A, for its part, shows a pitch control mechanism based on a complex system of planetary and ring gears to vary the blade angle, distinguishing itself from the present invention, which employs a much simpler and more direct kinematic linkage mechanism.

Document US 2017/0341733 A1 describes a rotor head that uses a rocker arm to amplify the pitch control motion; however, this document does not disclose the input kinematic chain of the present invention, which is characterized by the combination of a linear actuator, a tie rod, and a vertical bar to actuate said rocker arm. Finally, document GB 643 876 A presents another pitch control mechanism using a swashplate and a system of levers and links, whose specific configuration and the interconnection of its elements differ substantially from the solution proposed in the present invention.

In general, these are mechanically complex solutions, which, in addition to increasing the total weight of the gyroplane, entail a considerable increase in cost. There is therefore a need for a modified rotor that allows the necessary take-off run to be shortened as much as possible so that the take-off takes place in near-vertical conditions and allows take-off from heliports without the need to use a runway.

### Description of the invention

The subject matter of the invention consists of a gyroplane take-off rotor according to claim 1 configured to shorten the take-off run of the gyroplane to allow instantaneous take-off from any surface. The rotor comprises a mechanism for transmitting power from the engine to the rotor, the so-called prelauncher, which launches the rotor blades before take-off. A typical rotor head comprises two parts: a rotating part, attached to the rotor, and a fixed part, connected to the gyroplane controls.

The rotating part comprises:
- A bearing core or housing, as a base part;
- A flange support for the blade holder, fixed vertically and parallel to each other, on the core. Their centring must be very precise so that the assembly rotates in a balanced manner. Drilled at their upper end and sometimes fitted with bushes, they receive the horizontal rotor fixing shaft around which the rocker arm is hinged.
- A bearing retainer plate, located between the core and the flanges. It holds the bearing in its housing and is hollowed out in the centre of the bearing to clear the bearing centre bushing.
- A bearing tie rod shaft: its upper part rests on the inner bearing bushing, while the rest of the shaft is fitted in the centre of the bearing. This part is drilled along its entire length with a recess through which the fixing bolt with the fixed part will pass.

The fixed part is attached to the gyroplane, supports the rotating part and receives the pilot's orders by means of control rods. It consists of two main parts:
- A longitudinal control or pitch control arm: it is on this part that the rotating part is fixed by means of a screw. When the gyroplane is in flight, if a gust of wind hits its disc, the rotor is lifted. As it is hinged around the pitch axis, its overall incidence decreases and its speed does not vary.
- A lateral control arm: the axis of this control arm is fixed on a U-shaped part called a bridge, the lateral parts of which are horizontally drilled and fitted with bushes or needle bearings. The lower part of the bridge is drilled along its length perpendicular to the pitch axis and is fitted with a bushing. A shaft, around which the warping joint is made, is inserted, taking support from each side of the supports of the two bridges.

In the rotor of the invention, a mechanism has been developed in the head that allows, in a light and simple way, to modify the angle of attack of the blades at the moment prior to take-off and during take-off. The rotor of the invention also incorporates a new pre-launch system that manages to overload the rotor with revolutions before take-off.

By acting on the angle of attack of the blades, temporarily reducing it, it is possible to vary the lift they generate and therefore their induced drag, thus facilitating take-off. The reduction of the induced drag and the boosting of the prelauncher generate a synergistic effect, thanks to which the rotor can be over-launched up to approximately 40% more with respect to the rotor's revolutions in flight conditions. For example, if the rotor turns at 350 rpm in flight, the rotor can be launched at 490 rpm.

For this purpose the rotor of the invention comprises basically a linear actuator, a control linkage, linked at one end to the linear actuator, a vertical rod linked at its lower end to the other end of the linkage, a rocker arm hinged at an upper end of the vertical rod and two rods hingedly linked to the respective ends of the rocker arm and extending below. An elastic element holds the blade holders, and thus the gyroplane blades, in their flying position, where their angle of attack is high.

The claimed gyroplane take-off rotor is an ingenious, simple, economical and safe solution to reduce or eliminate the take-off run of the gyroplane, thus overcoming the objections of the current state of the art.

### Description of the drawings

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1.- Shows a top perspective view of the gyroplane take-off rotor assembly, including the gyroplane blades.
Figure 2.- Shows a lower perspective view of the rotor in figure 1.
Figure 3.- Shows a first partial exploded view of the rotor of figure 1, in which the modifications of the invention can be seen and the displacements generated are shown.

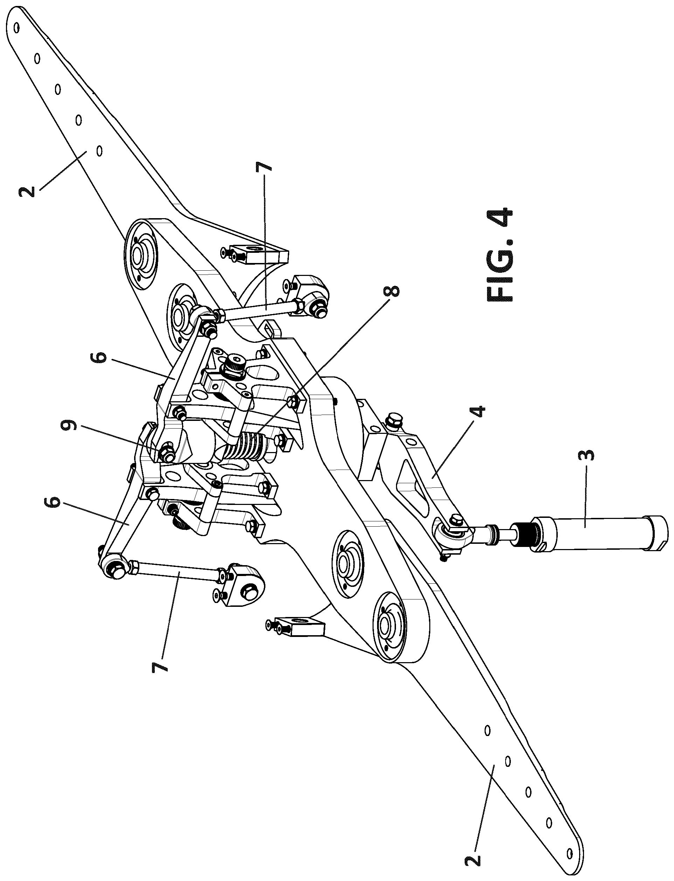

Figure 4.- Shows a second partial exploded view of the rotor.

### Preferred embodiment of the invention

A detailed explanation of an example of a preferred embodiment of the subject matter of the present invention is given below with the aid of the figures referred to above.

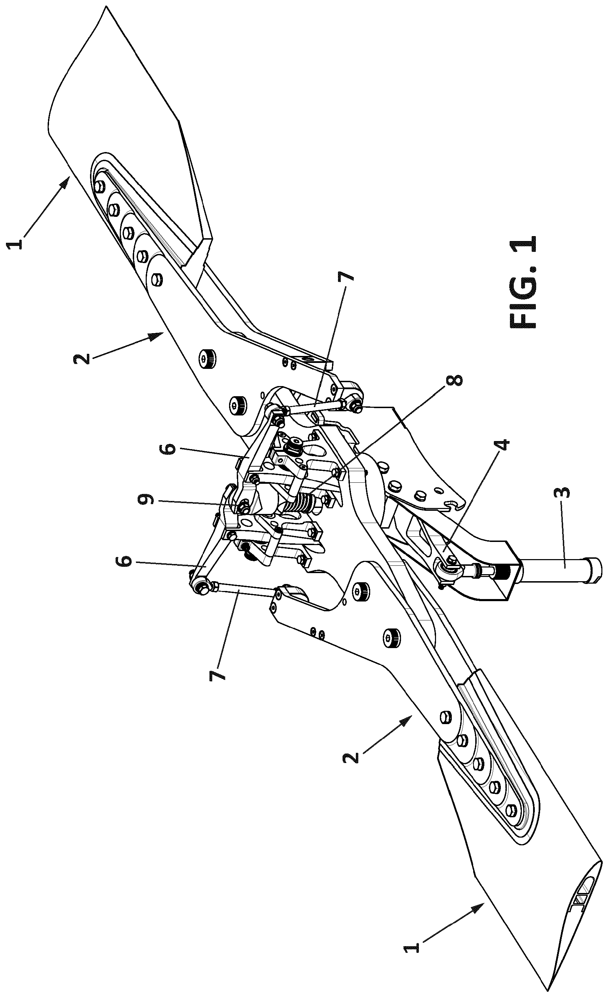

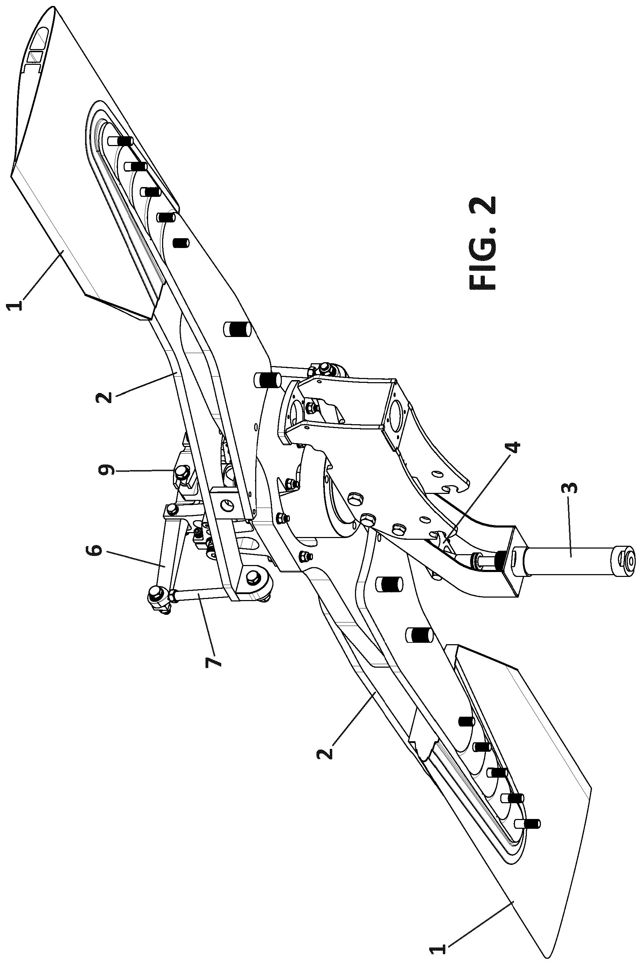

The described gyroplane take-off rotor, shown in figures 1 and 2, is designed to shorten the take-off run of a gyroplane so that it is instantaneous. The gyroplane comprises at least two blades (1), two respective blade holders (2) for coupling the blades (1) to the rotor, and a pre-launch device, not shown in the attached figures.

The rotor comprises modifications that form a mechanism attachable to the transmission linking the engine to the rotor, the so-called prelauncher, which launches the two rotor blades (1) before take-off.

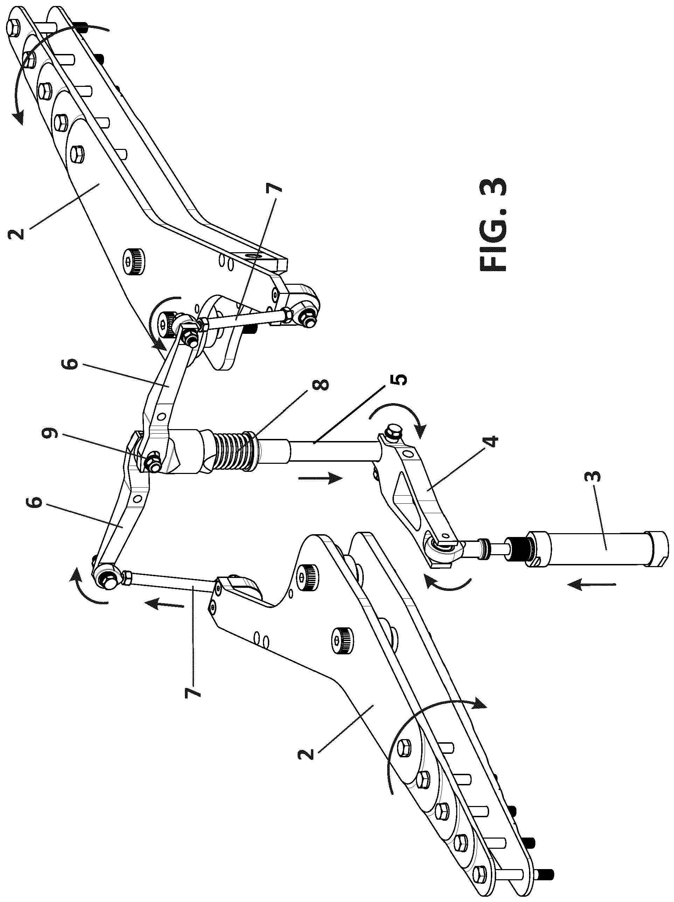

For this purpose, the modified rotor mechanism basically comprises a linear actuator (3), a tie rod (4) linked at one end to the linear actuator (3), a vertical bar (5) linked at its lower end to the other end of the tie rod (4), a rocker arm (6) hinged at an upper end of the vertical bar (5) and two rods (7) hingedly linked to the respective ends of the rocker arm (6) and extending downwards, as illustrated in figure 3. An elastic element (8) holds the blade holders (2), and thus the blades (1), in their flying position, where their angle of attack is high.

In the preferred embodiment shown here, the elastic element (8) consists of a spring coaxial to an upper end of the vertical bar (5). In alternative embodiments of the rotor, the elastic element (8) may be located in the tie rod (4) or in the rocker arm (6).

The linear actuator (3), which in this preferred embodiment is a pneumatic cylinder, is linked to the gyroplane pre-launcher device, which drives the linear actuator (3). The linear actuator (3) is arranged vertically, perpendicular to a plane defined by the blades (1).

In the case of the pneumatic cylinder, actuating the gyroplane's pre-thrower opens the valve that feeds the cylinder, which pushes the piston rod vertically upwards.

The tie rod (4) consists of a rod with two ends, by which it is linked in an articulated manner to, respectively, an upper end of the linear actuator (3) and a lower end of the vertical bar (5). Thus the tie rod (4) acts as a means of transmitting movement or force between two moving points, in this case the linear actuator (3) and the vertical bar (5).

In the preferred embodiment described here, as the piston rod of the pneumatic cylinder rises, the tie rod (4) ascends at the end linked to the linear actuator (3) and descends at the end linked to the vertical bar (5). In this way, the tie rod (4) pulls down on the vertical bar (5) so that it performs a downward linear movement, overcoming the resistance exerted by the elastic element (8).

The vertical bar (5) crosses the rotor head, as can be seen in figures 1 and 2, so that its upper end exceeds it. Two rocker arms (6) are located at this upper end to transform the linear movement of the vertical bar (5) into a rotary movement. The fulcrum (9) of each of the rocker arms (6) is linked to the upper end of the vertical bar (5), while a rod (7) hangs from the opposite end of each rocker arm (6) by means of a joint.

The lower part of each of the rods (7) is linked, through a respective joint, to the initial end of a blade holder (2). Each of the blade holders (2) has respective internal joints, in this case ball and socket joints, which allow them to rotate.

When the vertical bar (5) is lowered, the rocker arms (6) pivot around the fulcrum (9), applying a traction force to the rods (7). These in turn pull the blade holders (2), and thus the blades (1), upwards. The result is that the blades (1) are temporarily positioned at an angle of attack lower than the angle of attack in flight position. This reduces the lift generated by the blades (1), shortening the take-off run of the gyroplane.

Once the appropriate travel speed has been reached, the gyroplane's pre-thrower ceases to act. Consequently, the linear actuator (3) returns to its rest position and ceases to exert a force on the vertical bar (5), which returns to a flying position by the action of the elastic element (8). Consequently, the rocker arm (6) also returns to a flying position, causing the blade holders (2) and the blades (1) to return to a flying angle of attack, so that the gyroplane can fly in the usual way.

## Claims

1. Gyroplane take-off rotor for shortening the take-off run of a gyroplane,
- wherein the gyroplane comprises two blades (1), two blade holders (2), for coupling the blades (1) to the rotor, and a prelauncher device linked to the rotor via a transmission; and
- wherein the rotor comprises a mechanism which can be coupled to the transmission with the prelauncher and is operable by said prelauncher; wherein the mechanism comprises:
- a linear actuator (3), configured to be linked to the prelauncher and which is operable by the prelauncher;
- a tie rod (4), linked at one end to the linear actuator (3) such that the tie rod end ascends upon upward operation of the linear actuator (3);
- a vertical bar (5), linked at one lower end to the other end of the tie rod (4) wherein the upward ascending movement of the tie rod end causes a downward linear movement of the vertical bar (5);
- a rocker arm (6) hinged at an upper end of the vertical bar (5);
- two rods (7) hingedly linked to the respective ends of the rocker arm (6) and extending downwards; and
- an elastic element (8) for holding the blade holders (2) and the blades (1) in a flying position with a high angle of attack;
wherein the rotor allows a temporary reduction of the angle of attack of the blades (1) to shorten the take-off stroke.

2. Rotor according to claim 1 wherein the linear actuator (3) is a pneumatic cylinder.

3. Rotor according to any one of the preceding claims wherein the vertical bar (5) passes through the rotor head.

4. Rotor according to any one of claims 1-3 wherein the elastic element (8) is a spring coaxial to the upper end of the vertical bar (5).

5. Rotor according to any one of claims 1-3 wherein the elastic element (8) is located in the tie rod (4).

6. Rotor according to any one of claims 1-3 wherein the elastic element (8) is located in the rocker arms (6).

7. A gyroplane comprising a rotor according to any one of claims 1-6.

## Patentansprüche

1. Startrotor für einen Tragschrauber zur Verkürzung der Startstrecke eines Tragschraubers,
- wobei der Tragschrauber zwei Rotorblätter (1), zwei Blattträger (2) zur Kopplung der Rotorblätter (1) mit dem Rotor sowie eine durch ein Getriebe mit dem Rotor verbundene Vorstartvorrichtung umfasst; und
- wobei der Rotor einen Mechanismus umfasst, der mit dem Getriebe der Vorstartvorrichtung gekoppelt werden kann und durch diese Vorstartvorrichtung betätigbar ist;
wobei der Mechanismus umfasst:
- einen Linearantrieb (3), der so ausgelegt ist, dass er mit der Vorstartvorrichtung verbunden werden kann und der durch die Vorstartvorrichtung betätigbar ist;
- eine Zugstange (4), die an einem Ende mit dem Linearantrieb (3) verbunden ist, sodass sich das Ende der Zugstange bei einer Aufwärtsbewegung des Linearantriebs (3) nach oben bewegt;
- eine vertikale Stange (5), die an einem unteren Ende mit dem anderen Ende der Zugstange (4) verbunden ist, wobei die Aufwärtsbewegung des Zugstangenendes eine lineare Abwärtsbewegung der vertikalen Stange (5) bewirkt;
- einen Kipphebel (6), der an einem oberen Ende der vertikalen Stange (5) angebracht ist;
- zwei Stangen (7), die gelenkig mit den jeweiligen Enden des Kipphebels (6) verbunden sind und sich nach unten erstrecken; und
- ein elastisches Element (8) zum Halten der Blattträger (2) und der Rotorblätter (1) in einer Schwebeposition mit einem hohen Anstellwinkel;
wobei der Rotor eine vorübergehende Verringerung des Anstellwinkels der Rotorblätter (1) ermöglicht,
um den Startvorgang zu verkürzen.

2. Rotor nach Anspruch 1, wobei der Linearantrieb (3) ein Pneumatikzylinder ist.

3. Rotor nach einem der vorstehenden Ansprüche, wobei die vertikale Stange (5) den Rotorkopf durchquert.

4. Rotor nach einem der Ansprüche 1-3, wobei das elastische Element (8) eine Feder ist, die koaxial zum oberen Ende der vertikalen Stange (5) angeordnet ist.

5. Rotor nach einem der Ansprüche 1-3, wobei das elastische Element (8) in der Zugstange (4) angeordnet ist.

6. Rotor nach einem der Ansprüche 1-3, wobei das elastische Element (8) in den Kipphebeln (6) angeordnet ist.

7. Ein Tragschrauber, der einen Rotor nach einem der Ansprüche 1-6 umfasst.

## Revendications

1. Rotor de décollage d'autogire pour raccourcir la course de décollage d'un autogire,
- dans lequel l'autogire comprend deux pales (1), deux porte-pales (2), pour coupler les pales (1) au rotor, et un dispositif de prélancement relié au rotor par l'intermédiaire d'une transmission ; et
- dans lequel le rotor comprend un mécanisme pouvant être couplé à la transmission avec le dispositif de prélancement et pouvant être actionné par ledit dispositif de prélancement ;
- dans lequel le mécanisme comprend :
- un actionneur linéaire (3), configuré pour être relié au dispositif de prélancement et pouvant être actionné par le dispositif de prélancement ;
- une tige de liaison (4), reliée à une extrémité à l'actionneur linéaire (3) de telle sorte que l'extrémité de la tige de liaison s'élève lors d'un actionnement vers le haut de l'actionneur linéaire (3) ;
- une barre verticale (5), reliée à une extrémité inférieure à l'autre extrémité de la tige de liaison (4) dans lequel le mouvement ascendant de l'extrémité de la tige de liaison provoque un mouvement linéaire descendant de la barre verticale (5) ;
- un bras oscillant (6) articulé à une extrémité supérieure de la barre verticale (5) ;
- deux tringles (7) reliées de manière articulée aux extrémités respectives du bras oscillant (6) et s'étendant vers le bas ; et
- un élément élastique (8) destiné à maintenir les porte-pales (2) et les pales (1) dans une position de vol avec un angle d'attaque élevé ;
dans lequel le rotor permet une réduction temporaire de l'angle d'attaque des pales (1) afin de raccourcir la course de décollage.

2. Rotor selon la revendication 1, dans lequel l'actionneur linéaire (3) est un vérin pneumatique.

3. Rotor selon l'une quelconque des revendications précédentes, dans lequel la barre verticale (5) passe à travers la tête de rotor.

4. Rotor selon l'une quelconque des revendications 1 à 3, dans lequel l'élément élastique (8) est un ressort coaxial à l'extrémité supérieure de la barre verticale (5).

5. Rotor selon l'une quelconque des revendications 1 à 3, dans lequel l'élément élastique (8) est situé dans la tige de liaison (4).

6. Rotor selon l'une quelconque des revendications 1 à 3, dans lequel l'élément élastique (8) est situé dans les bras oscillants (6).

7. Autogire comprenant un rotor selon l'une quelconque des revendications 1 à 6.
